# EUROPEAN PATENT SPECIFICATION

(11) **EP 3 256 515 B1**
(45) Date of publication and mention of the grant of the patent: **16.10.2019**
(21) Application number: 16706483.1
(22) Date of filing: 09.02.2016
(51) Int. Cl.: C08J 5/22, H01M 8/1004, H01M 8/1053, H01M 8/106, H01M 8/1081, H01M 8/1039, H01M 8/1018, H01M 4/88, H01M 4/86

(54) **MEMBRANE ELECTRODE ASSEMBLY MANUFACTURING PROCESS**
MEMBRANELEKTRODENANORDNUNGHERSTELLUNGSVERFAHREN
PROCÉDÉ DE FABRICATION D'ENSEMBLE ÉLECTRODE-MEMBRANE

(30) Priority: 09.02.2015 US 201514616968
(43) Date of publication of application: 20.12.2017
(73) Proprietor: W. L. Gore & Associates, Inc., Newark, DE 19711 (US)
(72) Inventor: FREESE, Donald T., Newark, Delaware 19711 (US); BUSBY, F. Colin, Newark, Delaware 19711 (US)
(74) Representative: HGF Limited
(86) International application number: PCT/US2016/017126
(87) International publication number: WO 2016/130529

(56) References cited:
- WO-A1-97/46918
- WO-A2-03/073540
- WO-A2-2004/113070
- US-A1- 2012 189 942
- US-A1- 2014 120 458
- US-B1- 6 524 736

## Description

### Background of the Invention

A proton exchange membrane (hereinafter "PEM") fuel cell membrane electrode assembly (hereinafter "MEA") is comprised of an ionomer membrane with an anode electrode on one side and a cathode electrode on the other side. The membrane and electrodes are typically formed as separate layers and are bonded together with heat and/or pressure to form a composite sheet, known as a membrane-electrode assembly. A preferred method in which the layers are coated on top of each other in an efficient and cost-effective manner is desirable and is described below. US 2014/120458 A1 relates to a method comprising providing a freestanding external reinforcement layer and depositing a catalyst solution and membrane solution onto at least a portion of the freestanding external reinforcement layer. US 2012/189942 A1 relates to a method of making an electrode assembly by coating an ionomer solution onto a catalyst coated diffusion media to form a wet ionomer layer and applying a porous reinforcement layer to the wet ionomer layer such that the wet ionomer layer at least partially impregnates the reinforcement layer.
US 6 524 736 B1 relates to a method of making a membrane electrode assembly by using a porous support to control the drying of the electrode, and the use of wettable and non-wettable solvents to control the seepage of ionomer into the porous support. WO 03/073540 A2 relates to a process for manufacturing a catalyst coated membrane by applying at least one electrocatalyst coating composition to an element comprising a polymer membrane having a first and a second surface, and a first dimensionally stable temporary substrate, wherein the coating composition is applied to at least portions of the first surface of the polymer membrane, drying the electrocatalyst coating composition to form at least one first electrode on the polymer membrane of the element, applying a second dimensionally stable temporary substrate to the at least one first electrode, removing the first dimensionally stable temporary substrate from the polymer membrane, applying at least one electrocatalyst coating composition to at least a portion of the second surface of the polymer membrane, and drying the electrocatalyst coating composition on the polymer membrane to form a sandwich comprising the at least one second electrode, the polymer membrane, the at least one first electrode and the second dimensionally stable temporary substrate. WO 97/46918 A1 relates to a cleaning assembly mounted in a printer device employing at least one critical imaging surface and comprising a microporous membrane, e.g. formed from polytetrafluoroethylene. WO 2004/113070 A2 relates to waterproof and high moisture vapor permeable fabric laminates.

### Brief Description of the Drawings

Fig. 1 is a schematic of an exemplary step of the disclosed method.
Fig. 2 is a schematic of an exemplary step of the disclosed method.

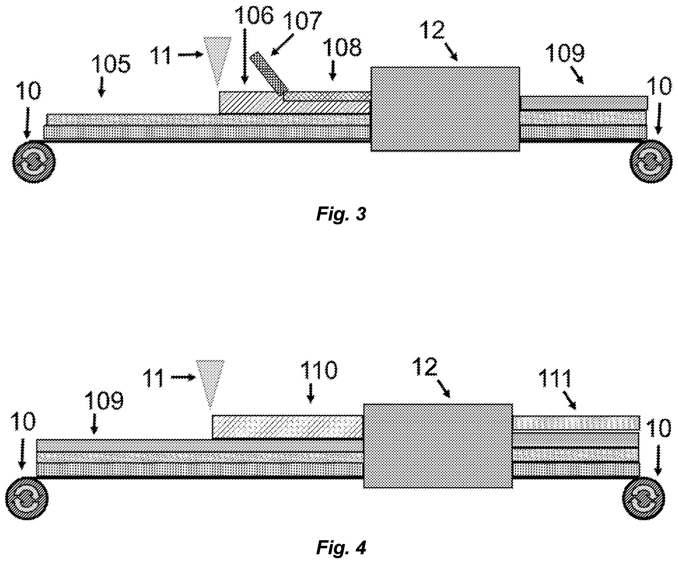

Fig. 3 is a schematic of an exemplary step of the disclosed method.
Fig. 4 is a schematic of an exemplary step of the disclosed method.
Fig. 5 is an exemplary construction of an air-permeable backer.
Fig. 6 is a scanning electron microscope image of an exemplary construction of a protective ionomer layer adjacent to an electrode.
Fig. 7 shows fuel cell polarization curves measured for cells having membrane electrode assemblies fabricated according to the method described herein (replicates labeled 1, 2, 3) and cells having membrane electrode assemblies fabricated using a decal lamination process (labeled X1, X2).
Fig. 8 shows macro-scale coating reticulation resulting from the use of water soluble alcohols in concentrations greater than around 30 wt%.
Fig. 9 shows penetration of ionomer coating into electrode pores.
Fig. 10 shows defects in the protective ionomer coating on substrates that are not sufficiently air permeable, which leave the electrode exposed to subsequent coating steps.

### Summary

The present disclosure includes a method of making a component for a membrane electrode assembly comprising the steps of (a) providing an air-permeable backer, (b) depositing an electrode onto the backer, and (c) depositing a mixture containing an ionomer on the electrode and drying the mixture to form a protective and continuous ionomer layer. Preferably, the air-permeable backer comprises an expanded polymer having release characteristics which enable the MEA to be peeled off of the backer, such as expanded polytetrafluoroethylene (hereinafter "ePTFE"). Also preferably, the expanded polymer has a mass per area of less than about 16 g/m², a bubble point of greater than about 70 psi, and a Z-strength sufficient to prevent cohesive failure of the expanded polymer when the electrode is peeled off of the air-permeable backer. A further embodiment includes the step of coupling a fabric to the expanded polymer, where the fabric is preferably polyester, less than about 0.006 inches thick, has a mass/area of less than about 65 g/yd², and is dimensionally stable within +/- 4% throughout the manufacturing process, such that the web can be handled on a roll to roll process without defects caused by web stretching or web shrinking. A further embodiment includes the step of bonding the fabric to the backer with a discontinuous adhesive pattern. Preferably, the fabric is dot-laminated to the backer with a urethane adhesive. A further embodiment includes an adhesive that has low swelling in the presence of water and alcohol, as described in Henn, US Patent No. 4,532,316. In a further embodiment, the air-permeable backer is a gas diffusion layer.

The protective ionomer layer is the dried form of a wet layer that comprises a water-insoluble alcohol. The ionomer is preferably a perfluorosulfonic acid (hereinafter "PFSA"), and the wet layer is aqueous and preferably comprises greater than about 60 wt% water, more preferably greater than about 90% water. The wet layer comprises less than about 10 wt% of the water-insoluble alcohol, and preferably less than 3 wt% of the water-insoluble alcohol. The water-insoluble alcohol is preferably hexanol. In an alternative embodiment, the wet layer further comprises a water-soluble alcohol or glycol ether, which preferably comprises less than about 10 wt% of the mixture. The water-soluble alcohol is preferably isopropanol, preferably present in an amount of less than about 5 wt%. The glycol ether is preferably dipropylene glycol (hereinafter "DPG") or propylene glycol methyl ether (hereinafter "PGME"), preferably present in an amount of less than about 5 wt%. The protective ionomer layer is formed after the water, hexanol, and other optional additives are allowed to evaporate as in an oven at elevated temperature (up to ∼200° C).

In a further embodiment, the disclosed method includes a further step (d) depositing a proton conducting layer onto the protective ionomer layer. Preferably, the proton conducting layer comprises an ionomer and a reinforcement. Preferably, the reinforcement comprises an ePTFE membrane. In further embodiments, the method may comprise the step of depositing a second ionomer layer onto the proton conducting layer. In further embodiments, the method may comprise the step of depositing another electrode onto said proton conducting layer or said second ionomer layer.

In all embodiments, the protective ionomer layer preferably has a thickness of about 0.1 to about 25 microns, more preferably about 0.1 to about 10 microns, and still more preferably about 0.1 to about 3 microns.

Accordingly, a first aspect of the invention provides a method of making a component for a membrane electrode assembly, according to claim 1.

A second embodiment of the first aspect provides a method as defined in the first embodiment, wherein said air-permeable backer comprises an expanded polymer having release characteristics.

A third embodiment of the first aspect provides a method as defined in the second embodiment wherein the expanded polymer is ePTFE. A fourth embodiment of the first aspect provides a method as defined in the third embodiment wherein said expanded polymer has a mass per area of less than about 16 g/m² of ePTFE. A fifth embodiment of the first aspect provides a method as defined in the third embodiment wherein said expanded polymer has a bubble point of greater than about 482 kPa (70 psi PMI). A sixth embodiment of the first aspect provides a method as defined in the third embodiment wherein said air-permeable backer has a Z-strength sufficient to prevent cohesive failure of said ePTFE when said electrode is peeled off of said air-permeable backer.

A seventh embodiment of the first aspect provides a method as defined in the first embodiment wherein an air-permeable backer is a gas diffusion layer.

An eighth embodiment of the first aspect provides a method as defined in the first embodiment further comprising coupling a fabric to said backer. A ninth embodiment of the first aspect provides a method as defined in the eighth embodiment wherein said air-permeable backer is dimensionally stable within +/- 4% throughout the manufacturing process. A tenth embodiment of the first aspect provides a method as defined in the eighth embodiment wherein said fabric comprises polyester. An eleventh embodiment of the first aspect provides a method as defined in the eighth embodiment wherein said fabric has a thickness of less than about 152.4 micrometers (0.006 inches). A twelfth embodiment of the first aspect provides a method as defined in the eighth embodiment wherein said fabric has a mass/area of less than about 76.5 g/m2 (64 g/yd2).

A thirteenth embodiment of the first aspect provides a method as defined in the eighth embodiment further comprising the step of bonding said fabric to said backer with an adhesive in a discontinuous pattern. A fourteenth embodiment of the first aspect provides a method as defined in the thirteenth embodiment wherein said fabric is dot-laminated to said backer with a urethane adhesive. A fifteenth embodiment of the first aspect provides a method as defined in the thirteenth embodiment wherein said adhesive is a solvent-stable adhesive.

A sixteenth embodiment of the first aspect provides a method as defined in the first embodiment wherein said ionomer is perfluorosulfonic acid (PFSA) ionomer.

A seventeenth embodiment of the first aspect provides a method as defined in the first embodiment wherein said aqueous wet layer comprises greater than about 60 wt% water. An eighteenth embodiment of the first aspect provides a method as defined in the first embodiment wherein said aqueous wet layer comprises greater than about 90 wt% water.

A nineteenth embodiment of the first aspect provides a method as defined in the first embodiment wherein said aqueous wet layer comprises less than about 3 wt% of said insoluble alcohol. A twentieth embodiment of the first aspect provides a method as defined in the first embodiment wherein said aqueous wet layer comprises less than about 5 wt% of said insoluble alcohol. A twenty-first embodiment of the first aspect provides a method as defined in the first embodiment wherein said water-insoluble alcohol comprises hexanol.

A twenty-second embodiment of the first aspect provides a method as defined in the first embodiment wherein said aqueous wet layer further comprises a water-soluble alcohol. A twenty-third embodiment of the first aspect provides a method as defined in the twenty-second embodiment wherein said aqueous wet layer comprises less than about 10 wt% of said water-soluble alcohol. A twenty-fourth embodiment of the first aspect provides a method as defined in the twenty-second embodiment wherein said water-soluble alcohol comprises glycol ether present in an amount of less than about 5 wt%. A twenty-fifth embodiment of the first aspect provides a method as defined in the twenty-second embodiment wherein said water-soluble alcohol comprises isopropyl alcohol present in an amount of less than about 5 wt%.

A twenty-sixth embodiment of the first aspect provides a method as defined in the first embodiment further comprising a step (e) depositing a proton conducting layer onto said protective ionomer layer. A twenty-seventh embodiment of the first aspect provides a method as defined in the twenty-sixth embodiment wherein said proton conducting layer comprises an ionomer.

A twenty-eighth embodiment of the first aspect provides a method as defined in the twenty-sixth embodiment wherein said proton conducting layer comprises a reinforcement. A twenty-ninth embodiment of the first aspect provides a method as defined in the twenty-eighth embodiment wherein said reinforcement comprises an ePTFE membrane.

A thirtieth embodiment of the first aspect provides a method as defined in the twenty-sixth embodiment further comprising the step of depositing an ionomer layer onto said proton conducting layer. A thirty-first embodiment of the first aspect provides a method as defined in the twenty-sixth embodiment further comprising the step of depositing another electrode onto said proton conducting layer.

A thirty-second embodiment of the first aspect provides a method as defined in the thirtieth embodiment further comprising the step of depositing another electrode onto said ionomer layer.

A thirty-third embodiment of the first aspect provides a method as defined in any one of the first through thirty-second embodiments wherein said protective ionomer layer has a thickness of about 0.1 to about 25 microns. A thirty-fourth embodiment of the first aspect provides a method as defined in any one of the first through thirty-second embodiments wherein said protective ionomer layer has a thickness of about 0.1 to about 10 microns. A thirty-fifth embodiment of the first aspect provides a method as defined in any one of the first through thirty-second embodiments wherein said protective ionomer layer has a thickness of about 0.1 to about 3 microns.

In a related second aspect, the invention provides a method of making a component for a membrane electrode assembly. A first embodiment of the second aspect provides a comprising the steps of:
(a) providing an air-permeable backer comprising ePTFE;
(b) depositing an electrode onto said backer;
(c) depositing an aqueous wet layer onto said electrode,
   wherein said aqueous wet layer comprises perfluorosulfonic acid ionomer; a water-insoluble alcohol selected from the group consisting of hexanol, pentanol, and 2-ethyl hexanol; and a water-soluble compound selected from the group consisting of isopropyl alcohol, dipropylene glycol, and propylene glycol methyl ether; and
   wherein said aqueous wet layer comprises greater than about 90 wt% water, less than about 5 wt% of said insoluble alcohol, and less than about 5 wt% of said water-soluble alcohol; and
(d) substantially drying said wet layer to form a protective ionomer layer.

A second embodiment of the second aspect provides a method as defined in the first embodiment, wherein said aqueous wet layer comprises about 90 wt% water, about 5 wt% perfluorosulfonic acid ionomer; about 3 wt% hexanol, and about 2 wt% isopropyl alcohol.

A third embodiment of the second aspect provides a method as defined in the first embodiment wherein the ePTFE has a mass per area of less than about 16 g/m². A fourth embodiment of the second aspect provides a method as defined in the first embodiment wherein the ePTFE has a bubble point of greater than about 70 psi PMI.

A fifth embodiment of the second aspect provides a method as defined in the first embodiment wherein said air-permeable backer has a Z-strength sufficient to prevent cohesive failure of said ePTFE when said electrode is peeled off of said air-permeable backer.

A sixth embodiment of the second aspect provides a method as defined in the first embodiment wherein the air-permeable backer is a gas diffusion layer.

A seventh embodiment of the second aspect provides a method as defined in the first embodiment further comprising coupling a fabric to said backer. An eighth embodiment of the second aspect provides a method as defined in the seventh embodiment wherein said air-permeable backer is dimensionally stable within +/- 4% throughout the manufacturing process. A ninth embodiment of the second aspect provides a method as defined in the seventh embodiment wherein said fabric comprises polyester. A tenth embodiment of the second aspect provides a method as defined in the seventh embodiment wherein said fabric has a thickness of less than about 152.4 micrometers (0.006 inches). An eleventh embodiment of the second aspect provides a method as defined in the seventh embodiment wherein said fabric has a mass/area of less than about 76.5 g/m² (64 g/yd²). A twelfth embodiment of the second aspect provides a method as defined in the seventh embodiment further comprising the step of bonding said fabric to said backer with an adhesive in a discontinuous pattern. A thirteenth embodiment of the second aspect provides a method as defined in the seventh embodiment wherein said fabric is dot-laminated to said backer with a urethane adhesive. A fourteenth embodiment of the second aspect provides a method as defined in the seventh embodiment wherein said adhesive is a solvent-stable adhesive.

A fifteenth embodiment of the second aspect provides a method as defined in the first embodiment further comprising a step (e) depositing a proton conducting layer onto said protective ionomer layer. A sixteenth embodiment of the second aspect provides a method as defined in the fifteenth embodiment wherein said proton conducting layer comprises an ionomer.

A seventeenth embodiment of the second aspect provides a method as defined in the fifteenth embodiment wherein said proton conducting layer comprises a reinforcement. An eighteenth embodiment of the second aspect provides a method as defined in Claim 17 wherein said reinforcement comprises an ePTFE membrane.

A nineteenth embodiment of the second aspect provides a method as defined in the fifteenth embodiment further comprising the step of depositing an ionomer layer onto said proton conducting layer. A twentieth embodiment of the second aspect provides a method as defined in the fifteenth embodiment further comprising the step of depositing another electrode onto said proton conducting layer. A twenty-first embodiment of the second aspect provides a method as defined in the nineteenth further comprising the step of depositing another electrode onto said ionomer layer.

A twenty-second embodiment of the second aspect provides a method as defined in any one of the first through twenty-first embodiments wherein said protective ionomer layer has a thickness of about 0.1 to about 25 microns.

A twenty-third embodiment of the second aspect provides a method as defined in any one of the first through twenty-first embodiments wherein said protective ionomer layer has a thickness of about 0.1 to about 10 microns.

A twenty-fourth embodiment of the second aspect provides a method as defined in any one of the first through twenty-first embodiments wherein said protective ionomer layer has a thickness of about 0.1 to about 3 microns.

### Detailed description

The disclosed method includes the steps described below and illustrated in the Figures. Although described as sequential steps for purposes of explanation, this disclosure contemplates that in practice the steps may be performed in any order or simultaneously. In all of the Figures, reference numeral 10 represents a roll feed or roll wind.

### Step 1

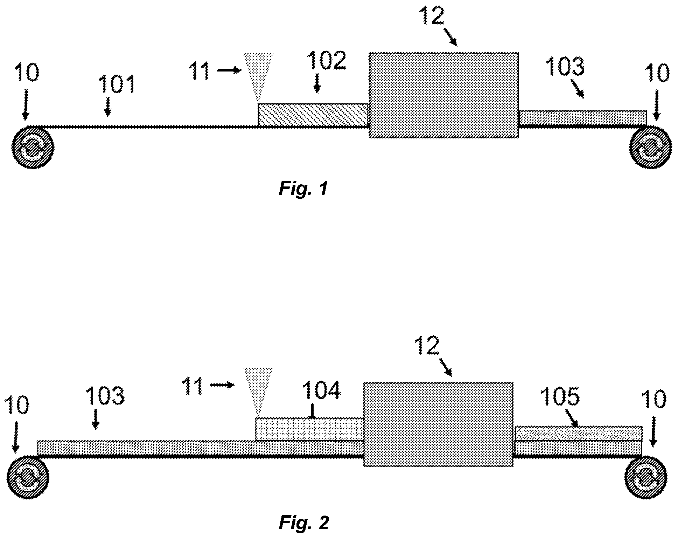

As illustrated in Figure 1, first electrode mixture **102** is coated and dried to form dried electrode **103** on a substrate **101** with sufficient mechanical properties for continuous web handling. The substrate **101** must be sufficiently air permeable to eliminate air-displacement defects in Step 2, described below. The substrate **101** in one embodiment is a backer or a release layer; in alternative embodiments the substrate may be a gas diffusion layer.

The electrode mixture **102** generally contains one or more components suitable for forming an electrode such as an anode or cathode. For example, the electrode can be an anode containing a catalyst for oxidizing fuel or a cathode for reducing an oxidant. The electrode mixture can contain appropriate catalysts that promote the oxidation of fuel (e.g., hydrogen) and the reduction of the oxidant (*e.g*., oxygen or air), respectively. For example, for PEM fuel cells, anode and cathode catalysts may include, but are not limited to, pure noble metals, for example Pt, Pd or Au; as well as binary, ternary or more complex alloys comprising the noble metals and one or more transition metals selected from the group Ti, V, Cr, Mn, Fe, Co, Ni, Cu, Zn, Y, Zr, Nb, Mo, Ru, Rh, Ag, Cd, In, Sn, Sb, La, Hf, Ta, W, Re, Os, Ir, TI, Pb and Bi. Pure Pt is particularly preferred for the anode when using pure hydrogen as the fuel. Pt-Ru alloys can be particularly useful for fuels containing reformed gases. Pure Pt can be a particularly useful catalyst for inclusion in certain cathodes. The anode and cathode can also include additional components that enhance the fuel cell operation. These include, but are not limited to, an electronic conductor, for example carbon, and an ionic conductor, for example a perfluorosulfonic acid based polymer or other appropriate ion exchange resin. The electrodes can be porous to allow gas access to the catalyst present in the structure.

A fuel cell can also be formed from the instant invention. Such fuel cells can comprise the a catalyst-coated membrane and may optionally also include gas diffusion layers on the cathode and anode sides. These gas diffusion membranes typically function to more efficiently disperse the fuel and oxidant. The fuel cell can comprise plates containing grooves or other means to more efficiently distribute the gases to the gas diffusion layers. The gas diffusion layers can also comprise a macroporous diffusion layer as well as a microporous diffusion layer. Microporous diffusion layers known in the art include coatings comprising carbon and optionally PTFE, as well as free standing microporous layers comprising carbon and ePTFE, for example CARBEL® MP gas diffusion media available from W. L. Gore & Associates. The fluids used as fuel and oxidant can comprise either a gas or liquid. Gaseous fuel and oxidant are preferable in certain embodiments, and a particularly preferable fuel comprises hydrogen. A particularly preferable oxidant comprises oxygen.

Electrodes for PEM fuel cells are typically coated on release layers. These layers need to have sufficient release, heat tolerance, mechanical properties for continuous web handling, surface uniformity, and must not interact chemically in a way that degrades electrode performance. Incumbent materials include Kapton® (DuPont), skived polytetrafluoroethylene (PTFE), and fluoropolymer-coated polyester films. Expanded PTFEs (ePTFEs) have been used but they usually lack robust web handling properties (they are conventionally prone to stretching, shrinkage, etc.) even with high mass/area (>50 g/m2). Additionally, all of these release layers are expensive due to raw material or manufacturing costs. Similarly, substrate **101** needs to have sufficient release, heat tolerance, mechanical properties for continuous web handling, surface uniformity, must not interact chemically in a way that degrades electrode performance, and be provided at low cost. We have identified ePTFE laminates that can be used for substrate **101** that provide the necessary properties at low cost.

Specifically, polymer webs with low mass, high Z-strength, and relatively tight pore sizes are disclosed herein to provide the required release properties for electrodes. These polymers are preferably expanded polymers such as ePTFE. The release characteristics are defined herein as the ability to be peeled away from the electrode without leaving significant visible traces of electrode on the substrate **101** nor allowing cohesive failure of the polymer web. Also preferably, the air-permeable substrate **101** comprises ePTFE having a mass per area of less than about 16 g/m² (measurements executed in accordance to U.S. Patent No. 7,306,729 B2), a bubble point of greater than about 70 psi (measurements executed in accordance to U.S. Patent No. 7,306,729 B2, with device manufactured by Porous Materials, Inc. in Ithaca, NY; hereinafter "PMI"), and a Z-strength sufficient to prevent cohesive failure when the electrode is peeled off the air-permeable backer (subject to the same visual test mentioned above).

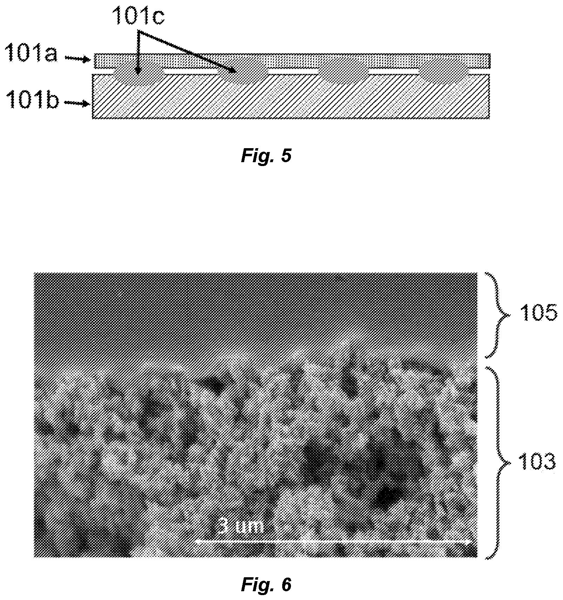

In one embodiment, the substrate **101** comprises of at least two layers, layer **101a** and layer **101b.** As depicted in Figure 5 an air-permeable layer **101a** (such as ePTFE with mass per area of less than 16 g/m²) maybe laminated to a low-cost support **101b** (a woven polyester such as 9000000322 US 101 (751125) PFP supplied by Milliken & Co. in Spartanburg, SC) that is also air permeable by means of a thermoplastic or other adhesive **101c** element. The **101c** element is compatible with the electrode mixture **102.** If an adhesive is used, element **101c** must be applied in a discontinuous (non-monolithic) discrete pattern to permit air permeability. Preferably, the low-cost support **101b** has a thickness of less than about 0.006 inches and has a mass/area of less than about 65 g/yd². Preferably, the substrate **101** construction is dimensionally stable within +/- 4% throughout the manufacturing process. Preferably, the low cost fabric support is made of polyester laminated to, for example, an ePTFE substrate using a solvent-stable urethane adhesive, as described in Henn, US Patent No. 4,532,316, applied in a gravure dot pattern. These woven polyester supports provide superior web handling properties while maintaining the required chemical and thermal performance.

### Step 2

Figure 2 shows Step 2 of a continuous process for manufacturing a MEA. After a substantially dried electrode **103** has been formed on substrate **101** in Step 1, slot die **11** deposits an aqueous wet layer **104,** comprising an aqueous ionomer mixture, onto the dried or substantially dried electrode **103.** Preferably slot die **11** deposits an aqueous mixture comprising a perfluorosulfonic acid (PFSA) ionomer such as Nafion® (DuPont) and a water-insoluble alcohol, to form the aqueous wet layer **104.** Coating methods other than slot die may also be used. This aqueous wet layer **104** is processed through the drying segment **12,** resulting in a substantially dry protective ionomer layer **105.**

Traditionally after the first electrode layer has been formed, a proton-conducting ionomer membrane layer is added on top of it, typically by hot lamination of the two dry layers. ePTFE reinforced ionomer layers are preferred, as they have mechanical properties which increase the durability of the MEA. However, if the mixtures of ionomer, water, and a water-soluble alcohol such as ethanol that are typically used to make ePTFE-reinforced proton-conducting films are coated directly on top of an electrode layer, they will penetrate, dissolve, and/or otherwise disrupt the dried electrode **103,** greatly reducing the electrochemical efficiency of the electrode. Therefore, according to the present disclosure, the formation of a thin, protective ionomer layer **105** on the electrode prevents disruption of the electrode as described above. This protective ionomer layer **105** has a thickness of about 0.1 to about 25 microns, preferably about 0.1 to about 10 microns, and most preferably about 0.5 to about 3 microns.

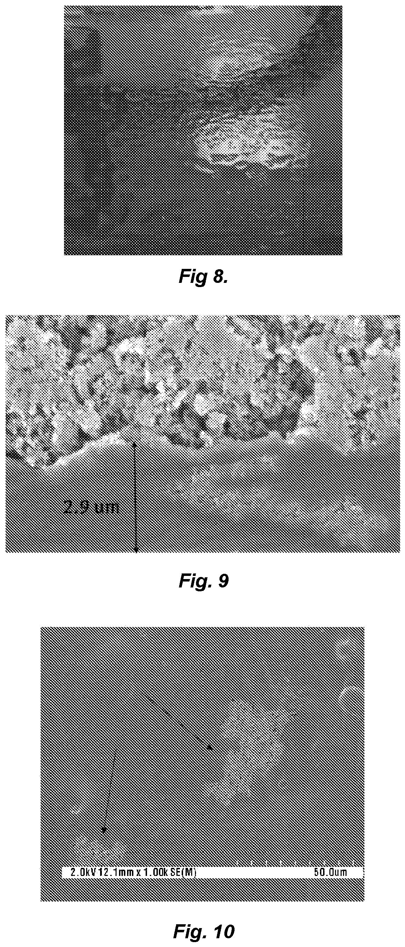

It is difficult to coat films composed of water and perfluorosulfonic acid (PFSA) ionomer on top of porous and/or hydrophobic surfaces or substrates, such as PEM electrodes. The coating mixture needs to have sufficiently low surface tension to wet the surface of the hydrophobic substrate. Low surface tension can be achieved with high concentrations (> ∼30 wt%) of water-soluble alcohols, such as ethyl alcohol, methyl alcohol, and isopropyl alcohol (hereinafter "IPA"). These coating solutions tend to reticulate during drying, resulting in non-uniformities such as thickness variations, holes, and wavy-edge defects as shown in Fig. 8. Furthermore, high concentrations of water-soluble alcohols can dissolve or disrupt the electrode substrate. On porous substrates, there is the additional problem that coating solutions with low surface tension will penetrate the pores in the substrate. In the case of an electrode, this reduces or eliminates gas access to the reaction sites, reducing performance or rendering the MEA inoperable, as shown in Fig. 9. In order to minimize this penetration, the alcohol content can be reduced, but this causes poor wetting at the interface of the coating and the substrate which leads to de-wetting film defects.

We discovered that a water-insoluble alcohol such as hexanol formed stable non-separating aqueous mixtures with PFSA ionomer that behave like oil-in-water emulsions. These mixtures permit wetting and monolithic film formation on top of porous and/or hydrophobic electrode substrates. These mixtures reduce the contact angle of the ionomer solution on fuel cell electrode layers. Specifically, 1-hexanol at 1-2 wt% lowered the surface tension of a solution of 5 wt% PFSA ionomer in water from 55 dynes/cm to 28 dynes/cm. Surprisingly, the PFSA ionomer, which is not considered a surfactant, acts like it emulsifies water-insoluble alcohols. During evaporation of this mixture, the film remains intact and does not reticulate or form de-wetting defects. Furthermore, there is no significant disruption of dried electrode **103** by the aqueous wet layer **104** or the protective ionomer layer **105,** as depicted in the SEM cross-section image of Figure 6. Furthermore the protective ionomer layer **105** has no negative influence on the electrochemical performance of the dried electrode **103.**

Preferably, the aqueous wet layer **104** is aqueous and comprises greater than about 60 wt% water, more preferably greater than about 90% water. The aqueous wet layer **104** comprises less than about 10 wt% of the water-insoluble alcohol, preferably less than about 5 wt% of the water-insoluble alcohol. In an alternative embodiment, the aqueous wet layer **104** further comprises a water-soluble alcohol, which preferably comprises less than about 10 wt% of the water-soluble alcohol. The water-soluble alcohol is preferably isopropanol, preferably present in an amount of less than about 5 wt%. The aqueous wet layer **104** further comprises less than about 10 wt% of a glycol ether. The glycol ether is preferably dipropylene glycol or propylene glycol methyl ether, preferably present in an amount of less than about 5 wt%.

These stable aqueous mixtures of hexanol and PFSA ionomer have been demonstrated with slot die and drawdown bar coating methods in batch coating and in continuous roll-to-roll processes. After coating the aqueous wet layer **104,** heat is applied to remove water and other volatile components, resulting in a substantially dry protective ionomer layer **105,** a monolithic solid film.

If the substrate **101** is not sufficiently air permeable, bubble defects will disrupt the coating, leaving part of the electrode surface exposed after the coating has dried, as shown in Fig. 10. These defects can allow the ionomer/alcohol/water solution applied in Step 3 (ionomer mixture **106**) to penetrate and/or dissolve the dried electrode **103** which was coated in Step 1, thus reducing electrochemical performance and/or durability.

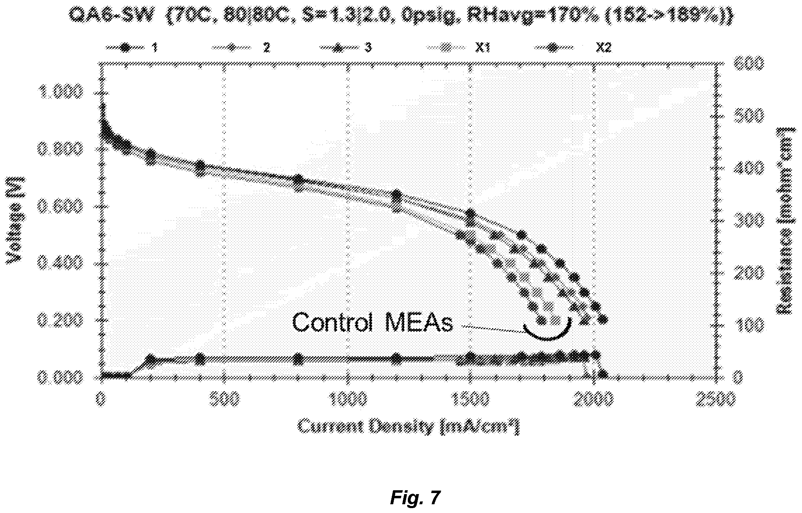

An aqueous mixture of about 90 wt% water, 5 wt% ionomer, 3 wt% hexanol, and 2 wt% IPA was coated with a slot die and substantially dried at an oven temperature of 140° C for 3 minutes to form a protective monolithic film of ionomer on the surface of a cathode electrode layer without substantial penetration of the protective ionomer layer into the electrode layer, as shown in Fig. 6. Protective ionomer layer **105** and electrode **103** are shown in Fig. 6. The protective ionomer layer had a thickness of about 2 microns. A beginning-of-life polarization measurement indicated that the coated ionomer layer formed an ionically-conductive interface and that the electrode structure was uncompromised by the ionomer coating. Fig. 7 shows a fuel cell polarization curve measured on a membrane electrode assembly made from the cathode/membrane two layer structure shown in Fig. 6. The test protocol used for the measurements in Fig. 7 is described by Edmundson & Busby, et al. (ECS Trans., 33 (1) 1297-1307 (2010)). In alternative embodiments, two other water-insoluble alcohols (pentanol, 2-ethyl hexanol) were used in place of hexanol to form top coats of ionomer on electrode surfaces. Optionally, water-soluble compounds (such as IPA, DPG, PGME) are also added and are found to be compatible with the mixture. These water-soluble compounds improved film formation and/or film stability during coating and drying.

### Step 3 (optional)

A composite wet layer **108**, preferably an ePTFE-reinforced ionomer layer, is formed on top of the protective ionomer layer **105.** In the composite wet layer **108**, the ionomer mixture **106** preferably substantially impregnates the microporous ePTFE **107** to render an interior volume of the ePTFE substantially occlusive, as described in Bahar et al, US Patent No. RE 37,307, thereby forming the composite wet layer **108.** Subsequent heat treatment of composite wet layer **108** through the drying segment **12,** results in formation of dried composite layer **109.** Alternatively, an unreinforced ionomer may be used in place of a composite wet layer.

### Step 3A (optional)

Optionally an ionomer mixture coating can be applied to the dried composite layer **109,** resulting in formation of a second wet layer and if optionally dried it will result in the formation of a second ionomer layer.

### Step 4 (optional)

Optionally a second wet electrode layer **110** is coated on **109** (or a second ionomer layer if step 3A takes place) and will result in a second electrode layer **111** after heat treatment, thus completing the membrane-electrode assembly.

As is well understood by one of ordinary skill in the art, the process described above and in the figures can by automated using roll goods, and automated pay-off and collection systems so that each step is accomplished in a continuous fashion, and the final product is a roll of solid polymer electrolyte supported on a thin polymer film.

Although the foregoing has been described in some detail by way of illustration and example for purposes of clarity and understanding, one of skill in the art will appreciate that certain changes and modifications can be practiced within the scope of the appended claims.

## Claims

1. A method of making a component for a membrane electrode assembly comprising the steps of:
(a) providing an air-permeable backer;
(b) depositing an electrode onto said backer;
(c) depositing an aqueous wet layer onto said electrode, wherein said aqueous wet layer comprises a water-insoluble alcohol selected from pentanol, hexanol and 2-ethyl hexanol, and an ionomer; and
(d) drying said wet layer to form a protective ionomer layer .

2. A method as defined in Claim 1 wherein said air-permeable backer comprises an expanded polymer having release characteristics.

3. A method as defined in Claim 2 wherein the expanded polymer is expanded polytetrafluoroethylene (ePTFE) and wherein said expanded polymer has a mass per area of less than 16 g/m² of ePTFE.

4. A method as defined in Claim 2 wherein the expanded polymer is expanded polytetrafluoroethylene (ePTFE) and wherein said expanded polymer has a bubble point of greater than 482 kPa (70 psi PMI).

5. A method as defined in Claim 1 wherein the air-permeable backer is a gas diffusion layer.

6. A method as defined in Claim 1 further comprising coupling a fabric to said backer.

7. A method as defined in Claim 6, wherein said fabric comprises polyester.

8. A method as defined in Claim 6 or 7 further comprising the step of bonding said fabric to said backer with an adhesive in a discontinuous pattern.

9. A method as defined in Claim 8, wherein said fabric is dot-laminated to said backer with a urethane adhesive.

10. A method as defined in Claim 1, wherein said ionomer is perfluorosulfonic acid (PFSA) ionomer.

11. A method as defined in Claim 1 wherein said aqueous wet layer comprises greater than 60 wt% water

12. A method as defined in Claim 1 wherein said aqueous wet layer comprises less than 5 wt% of said water-insoluble alcohol.

13. A method as defined in Claim 1 wherein said aqueous wet layer further comprises a water-soluble alcohol in an amount of less than 10 wt%, preferably the water-soluble alcohol is selected from isopropyl alcohol, dipropylene glycol and propylene glycol methyl ether.

14. A method as defined in Claim 1 wherein said aqueous wet layer comprises a water-soluble alcohol comprising glycol ether or isopropyl alcohol present in an amount of less than 5 wt%.

15. A method as defined in Claim 1 further comprising a step (e) depositing a proton conducting layer onto said protective ionomer layer.

16. A method as defined in Claim 15 further comprising the step of depositing an ionomer layer onto said proton conducting layer and depositing another electrode onto said ionomer layer.

17. A method as defined in Claim 1 wherein said protective ionomer layer has a thickness of 0.1 to 25 microns.

18. A method as defined in Claim 1, wherein
said air-permeable backer comprises expanded polytetrafluoroethylene (ePTFE);
said ionomer is perfluorosulfonic acid (PFSA) ionomer;
said aqueous wet layer further comprises a water-soluble alcohol selected from the group consisting of isopropyl alcohol, dipropylene glycol, and propylene glycol methyl ether; and
said aqueous wet layer comprises greater than 90 wt% water, less than 5 wt% of said water-insoluble alcohol, and less than 5 wt% of said water-soluble alcohol.

## Patentansprüche

1. Verfahren zur Herstellung eines Bausteins für eine Membran-Elektrodenanordnung, umfassend die Schritte von:
(a) Vorsehen eines luftdurchlässigen Trägers,
(b) Abscheiden einer Elektrode auf dem Träger,
(c) Abscheiden einer wässrigen Nassschicht auf der Elektrode, wobei die wässrige Nassschicht einen wasserunlöslichen Alkohol, ausgewählt aus Pentanol, Hexanol und 2-Ethylhexanol, und ein Ionomer umfasst, und
(d) Trocknen der Nassschicht, um eine schützende Ionomerschicht zu bilden.

2. Verfahren nach Anspruch 1, wobei der luftdurchlässige Träger ein expandiertes Polymer mit Freisetzungseigenschaften umfasst.

3. Verfahren nach Anspruch 2, wobei das expandierte Polymer expandiertes Polytetrafluorethylen (ePTFE) ist und wobei das expandierte Polymer eine Masse pro Fläche von weniger als 16 g/m² ePTFE aufweist.

4. Verfahren nach Anspruch 2, wobei das expandierte Polymer expandiertes Polytetrafluorethylen (ePTFE) ist und wobei das expandierte Polymer einen Blaspunkt von mehr als 482 kPa (70 psi PMI) aufweist.

5. Verfahren nach Anspruch 1, wobei der luftdurchlässige Träger eine Gasdiffusionsschicht ist.

6. Verfahren nach Anspruch 1, ferner umfassend das Koppeln eines Gewebes mit dem Träger.

7. Verfahren nach Anspruch 6, wobei das Gewebe Polyester umfasst.

8. Verfahren nach Anspruch 6 oder 7, ferner umfassend den Schritt des Bindens des Gewebes an den Träger mit einem Klebstoff in einem diskontinuierlichen Muster.

9. Verfahren nach Anspruch 8, wobei das Gewebe mit einem Urethanklebstoff punktuell auf den Träger laminiert wird.

10. Verfahren nach Anspruch 1, wobei das Ionomer Perfluorsulfonsäure (PFSA)-Ionomer ist.

11. Verfahren nach Anspruch 1, wobei die wässrige Nassschicht mehr als 60 % Massenanteil Wasser umfasst.

12. Verfahren nach Anspruch 1, wobei die wässrige Nassschicht weniger als 5 % Massenanteil des wasserunlöslichen Alkohols umfasst.

13. Verfahren nach Anspruch 1, wobei die wässrige Nassschicht ferner einen wasserlöslichen Alkohol in einer Menge von weniger als 10 % Massenanteil umfasst, wobei der wasserlösliche Alkohol vorzugsweise ausgewählt ist aus Isopropylalkohol, Dipropylenglykol und Propylenglykolmethylether.

14. Verfahren nach Anspruch 1, wobei die wässrige Nassschicht einen wasserlöslichen Alkohol umfasst, der Glykolether oder Isopropylalkohol umfasst, der in einer Menge von weniger als 5 % Massenanteil vorliegt.

15. Verfahren nach Anspruch 1, ferner umfassend einen Schritt (e) des Abscheidens einer protonenleitenden Schicht auf die schützende Ionomerschicht.

16. Verfahren nach Anspruch 15, ferner umfassend den Schritt des Abscheidens einer Ionomerschicht auf die protonenleitende Schicht und des Abscheidens einer weiteren Elektrode auf die Ionomerschicht.

17. Verfahren nach Anspruch 1, wobei die schützende Ionomerschicht eine Dicke von 0,1 bis 25 Mikrometer aufweist.

18. Verfahren nach Anspruch 1, wobei der luftdurchlässige Träger expandiertes Polytetrafluorethylen (ePTFE) umfasst,
das Ionomer Perfluorsulfonsäure (PFSA)-Ionomer ist,
die wässrige Nassschicht ferner einen wasserlöslichen Alkohol umfasst, ausgewählt aus der Gruppe bestehend aus Isopropylalkohol, Dipropylenglykol und Propylenglykolmethylether, und
die wässrige Nassschicht mehr als 90 % Massenanteil Wasser, weniger als 5 % Massenanteil des wasserunlöslichen Alkohols und weniger als 5 % Massenanteil des wasserlöslichen Alkohols umfasst.

## Revendications

1. Procédé de fabrication d'un composant pour un ensemble électrode-membrane comprenant les étapes de :
(a) fourniture d'un support perméable à l'air ;
(b) dépôt d'une électrode sur ledit support ;
(c) dépôt d'une couche humide aqueuse sur ladite électrode, ladite couche humide aqueuse comprenant un alcool insoluble dans l'eau choisi parmi le pentanol, l'hexanol et le 2-éthylhexanol, et un ionomère ; et
(d) séchage de ladite couche humide pour former une couche d'ionomère protectrice.

2. Procédé selon la revendication 1, ledit support perméable à l'air comprenant un polymère expansé possédant des caractéristiques de libération.

3. Procédé selon la revendication 2, ledit polymère expansé étant du polytétrafluoroéthylène expansé (ePTFE) et ledit polymère expansé possédant une masse de ePTFE par unité de surface inférieure à 16 g/m².

4. Procédé selon la revendication 2, ledit polymère expansé étant du polytétrafluoroéthylène expansé (ePTFE) et ledit polymère expansé possédant un point de bulle supérieur à 482 kPa (70 psi PMI).

5. Procédé selon la revendication 1, ledit support perméable à l'air étant une couche de diffusion de gaz.

6. Procédé selon la revendication 1, comprenant en outre le couplage d'un tissu audit support.

7. Procédé selon la revendication 6, ledit tissu comprenant du polyester.

8. Procédé selon la revendication 6 ou 7, comprenant en outre l'étape de liaison dudit tissu audit support avec un adhésif selon un motif discontinu.

9. Procédé selon la revendication 8, ledit tissu étant stratifié par points sur ledit support avec un adhésif uréthane.

10. Procédé selon la revendication 1, ledit ionomère étant un ionomère de l'acide perfluorosulfonique (PFSA).

11. Procédé selon la revendication 1, ladite couche humide aqueuse comprenant plus de 60 % en poids d'eau.

12. Procédé selon la revendication 1, ladite couche humide aqueuse comprenant moins de 5 % en poids dudit alcool insoluble dans l'eau.

13. Procédé selon la revendication 1, ladite couche humide aqueuse comprenant en outre un alcool soluble dans l'eau en une quantité inférieure à 10 % en poids, de préférence ledit alcool soluble dans l'eau étant choisi parmi l'alcool isopropylique, le dipropylène glycol et l'éther méthylique de propylène glycol.

14. Procédé selon la revendication 1, ladite couche humide aqueuse comprenant un alcool soluble dans l'eau comprenant un éther de glycol ou l'alcool isopropylique présent en une quantité inférieure à 5 % en poids.

15. Procédé selon la revendication 1, comprenant en outre une étape (e) de dépôt d'une couche conductrice de protons sur ladite couche d'ionomère protectrice.

16. Procédé selon la revendication 15, comprenant en outre l'étape de dépôt d'une couche d'ionomère sur ladite couche conductrice de protons et de dépôt d'une autre électrode sur ladite couche d'ionomère.

17. Procédé selon la revendication 1, ladite couche d'ionomère protectrice possédant une épaisseur allant de 0,1 à 25 micromètres.

18. Procédé selon la revendication 1, ledit support perméable à l'air comprenant du polytétrafluoroéthylène expansé (ePTFE) ;
ledit ionomère étant un ionomère d'acide perfluorosulfonique (PFSA) ;
ladite couche humide aqueuse comprenant en outre un alcool soluble dans l'eau choisi dans le groupe constitué de l'alcool isopropylique, du dipropylène glycol et de l'éther méthylique de propylène glycol ; et
ladite couche humide aqueuse comprenant plus de 90 % en poids d'eau, moins de 5 % en poids dudit alcool insoluble dans l'eau et moins de 5 % en poids dudit alcool soluble dans l'eau.
